# FASCICULE DE BREVET EUROPEEN

(11) **EP 4 003 800 B1**
(45) Date de publication et mention de la délivrance du brevet: **30.04.2025**
(21) Numéro de dépôt: 20737191.5
(22) Date de dépôt: 08.07.2020
(51) Int. Cl.: B60W 20/15, B60K 6/442, B60K 6/547, B60R 16/03, H02J 7/34, B60W 30/19

(54) **PROCEDE DE COMMANDE, LORS DES PASSAGES DE VITESSES, DES RESEAUX D'ALIMENTATION ELECTRIQUE D'UN VEHICULE HYBRIDE EQUIPE D'UNE BOITE DE VITESSE ROBOTISEE, AINSI QUE DISPOSITIF DE COMMANDE ET VÉHICULE**
VERFAHREN ZUR STEUERUNG, WÄHREND DES GANGWECHSELS, DER ELEKTRISCHEN ENERGIEVERSORGUNGSNETZE EINES HYBRIDFAHRZEUGS MIT EINEM AUTOMATISIERTEN SCHALTGETRIEBE UND STEUERVORRICHTUNG, ELEKTRISCHE BAUGRUPPE UND FAHRZEUG
METHOD FOR CONTROLLING, DURING GEAR CHANGES, THE ELECTRICAL POWER SUPPLY NETWORKS OF A HYBRID VEHICLE EQUIPPED WITH AN AUTOMATED GEAR BOX, CONTROL DEVICE AND VEHICLE

(30) Priorité: 22.07.2019 FR 1908268
(43) Date de publication de la demande: 01.06.2022
(73) Titulaire: Renault s.a.s, 92100 Boulogne Billancourt (FR)
(72) Inventeur: MERIENNE, Ludovic, 91190 Gif-sur-Yvette (FR)
(74) Mandataire: Renault Group
(86) Numéro de dépôt international: PCT/EP2020/069203
(87) Numéro de publication internationale: WO 2021/013539

(56) Documents cités:
- WO-A1-2019/122696
- WO-A1-2019/122696
- FR-A1- 3 051 419
- FR-A1- 3 051 419

## Description

La présente invention concerne un ensemble d'alimentation d'un véhicule automobile hybride et un procédé pour réguler, lors des passages de vitesses, la puissance et la tension du réseau basse tension d'un véhicule hybride équipé d'une boite de vitesse robotisée, aussi appelée transmission hybride.

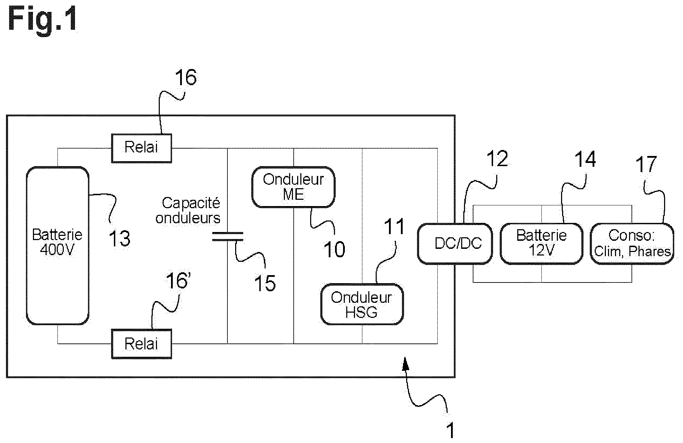

Plus précisément, elle a pour objet un procédé de lissage de la tension électrique du réseau électrique haute tension et du réseau électrique basse tension d'un véhicule automobile hybride, tel que représenté en figure 1, lorsqu'un contrôle du couple est effectué pendant les changements de rapports d'un groupe motopropulseur à transmission hybride.

Le groupe motopropulseur hybride est composé d'un moteur thermique relié à un premier arbre d'entrée de boîte de vitesses qui peut transmettre son couple aux roues sur différents rapports de transmission, d'une première machine électrique reliée à un deuxième arbre d'entrée de celle-ci, et d'une deuxième machine électrique, nommée alterno-démarreur haute tension, abrégé HSG, reliée alternativement au premier ou au deuxième arbre d'entrée de la boîte, qui peut agir comme générateur et comme récepteur d'énergie électrique.

La publication WO 2014/207332 décrit une transmission hybride de ce type, disposant de plusieurs rapports électriques, thermiques et hybrides, où les couples du moteur thermique et d'au moins une machine électrique s'additionnent en direction des roues. Le couple d'origine thermique est transmis aux roues sur un rapport de transmission « thermique », et celle du couple de la machine électrique principale sur un rapport « électrique ».

En référence à la figure 1, l'ensemble d'alimentation d'un tel véhicule hybride comprend une batterie d'accumulateurs électriques 13, la première machine électrique, non représentée, associée à un premier onduleur 10, et le HSG, non représenté, associé à un deuxième onduleur 11. Les deux onduleurs 10,11 sont montés en parallèle l'un de l'autre, en parallèle de capacités 15 dites capacités d'onduleurs 15, et en parallèle du convertisseur continu-continu, abrégé DCDC 12, apte à fournir l'énergie, depuis le réseau haute tension vers le réseau de bord basse tension 17, aussi dit réseau 12V, alimenté par une batterie 14.

Lors de changements de rapport de transmission thermique en mode hybride, la transmission entre le moteur thermique et les roues est interrompue. Le couple du HSG est alors piloté pour synchroniser le moteur thermique sur son nouveau rapport, la machine principale fournissant du couple à la roue. Dans la pratique, l'architecture électrique du véhicule, en particulier la puissance disponible sur la machine électrique principale, limite l'apport de celle-ci pendant les changements de rapport thermique. Si l'interruption du couple thermique est peu compensée, le conducteur et les passagers du véhicule ressentent ces passages, comme ceux d'une boîte de vitesse robotisée à rupture de couple. Il est donc souhaitable de parvenir à estomper la rupture de couple ressentie par le conducteur et les usagers du véhicule, pendant les passages de vitesses.

Une diminution du couple disponible autour du passage répond en théorie à ce problème. Mais, une telle mesure est inacceptable, pour son impact négatif sur les performances.

Pour résoudre ce problème, on connait le document FR3051419 qui divulgue un procédé de contrôle optimisé du couple disponible sur un véhicule hybride pendant les passages de vitesses.

La solution du document FR3051419 consiste à augmenter la tension d'alimentation de l'onduleur, pour augmenter la puissance.

A 450V d'alimentation, la machine électrique peut fournir une puissance de sensiblement 70kW et l'alterno-démarreur haute tension (abrégé HSG), fonctionnant en tant que générateur électrique, une puissance d'environ 50kW. Aussi, pendant ce changement de rapport, pour augmenter la tension d'alimentation de l'onduleur, les relais batterie 16, 16' sont ouverts de manière à faire monter la tension aux bornes de la capacité des onduleurs 15.

Ainsi, pendant le changement de rapport, la boite de vitesse fonctionnant selon un mode de type hybride série, la machine électrique fournit à la roue exactement la puissance que fournit le HSG au réseau haute tension, le moteur thermique maintenant le régime du HSG.

Ouvrir les relais batteries est la seule solution simple pour augmenter la tension sur le réseau car autrement la batterie absorberait toute la puissance fournie par le HSG et il serait alors impossible d'augmenter les puissances réalisables.

Toutefois la machine électrique n'est pas le seul dispositif consommateur d'énergie du réseau haute-tension. Sur un véhicule électrique, ou hybride disposant d'une batterie de tension suffisante, le réseau de bord 17 est alimenté par une batterie 14 de 12 Volts. À cet effet, un convertisseur DC/DC prélève de l'énergie à la batterie 400V du réseau haute-tension pour l'envoyer vers la batterie 14 basse-tension.

Le principe du convertisseur DC/DC est de réguler la tension du réseau de bord 12V à une consigne réglable, généralement réglée à 13.5V.

Le HSG alimente donc en énergie la machine électrique et le DC/DC qui continue à réguler la tension du réseau de bord 17.

Le problème qui se pose est alors qu'en cas de variation de consommation du réseau de bord 17, par exemple une rotation du volant faisant appel à la direction assistée, l'appel de courant fait naturellement diminuer la tension du réseau de bord 17 ce qui déclenche une injection de courant par le DC/DC de manière à maintenir la tension à 13.5V.

L'énergie ainsi prélevée sur le réseau haute-tension (HT) pose deux problèmes. Le premier est que cette énergie n'est plus disponible pour la machine électrique dont il faut en tenir compte dans la puissance à fournir à la machine électrique pendant le changement de rapport. Le second est que cet appel de courant rapide génère des perturbations sur la régulation de tension du réseau HT qui est effectuée par le HSG pendant cette phase de changement de rapport.

Aussi, il existe le besoin d'une solution pour résoudre les problèmes énoncés précédemment.

À cet effet on propose un procédé de commande d'un ensemble électrique pour un véhicule automobile hybride comprenant un boitier de vitesse à transmission hybride, un réseau électrique haute tension comprenant une batterie d'accumulateurs électriques, un alterno-démarreur haute tension associé à un onduleur, une machine électrique associée à un autre onduleur, le véhicule automobile hybride comprenant en outre un réseau électrique basse tension, et un convertisseur continu-continu apte à alimenter, depuis le réseau haute tension, le réseau électrique basse tension ;
le procédé comprenant :
- Une étape de détection d'un changement de mode ou de vitesse sur ledit boitier de vitesse, nécessitant l'ouverture des relais batterie ;
- Lorsqu'un tel changement de mode ou de vitesse est détecté, une étape d'acquisition des valeurs de tension et de courant aux bornes du convertisseur continu-continu ;
- Une première étape de calcul de la puissance d'entrée du convertisseur continu-continu en fonction des valeurs de tensions et de courant acquises ;
- Une deuxième étape de calcul d'une valeur de puissance minimale en fonction de ladite puissance d'entrée et d'une valeur de correction ;
- Une étape de commande du convertisseur continu-continu de sorte à fournir en sortie ladite puissance minimale calculée.

Ainsi au lieu d'avoir des variations de tension sur le réseau haute tension, on fait varier le réseau basse tension. Le procédé force ainsi le DCDC à fournir une puissance au-delà d'un certain seuil, en sachant que la tension pourra varier en restant au-dessus de la tension de consigne d'un réseau basse-tension, fréquemment 13.5V. Ainsi, on reste protégé contre les chutes de tension du réseau de bord et, par exemple, des redémarrages de calculateurs qu'elles pourraient provoquer.

En particulier la deuxième étape de calcul comprend l'addition de la puissance d'entrée avec ladite valeur de correction. Ainsi, on peut obtenir la valeur minimale de manière relativement simple.

En particulier, ladite valeur de correction est comprise entre 1kW et 5kW, par exemple sensiblement égale à 2kW. Ainsi la tension sur le réseau basse-tension peut rester suffisamment élevé pour assurer le bon fonctionnement des équipements basse tension sans risque de les endommager.

L'invention concerne aussi un dispositif de commande selon la revendication 4.

L'invention concerne aussi un véhicule automobile hybride selon la revendication 5.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
[Fig. 1] est une vue schématique d'un ensemble électrique d'un véhicule automobile hybride selon l'invention ; et
[Fig. 2] est un organigramme du procédé selon le mode de réalisation de l'invention.

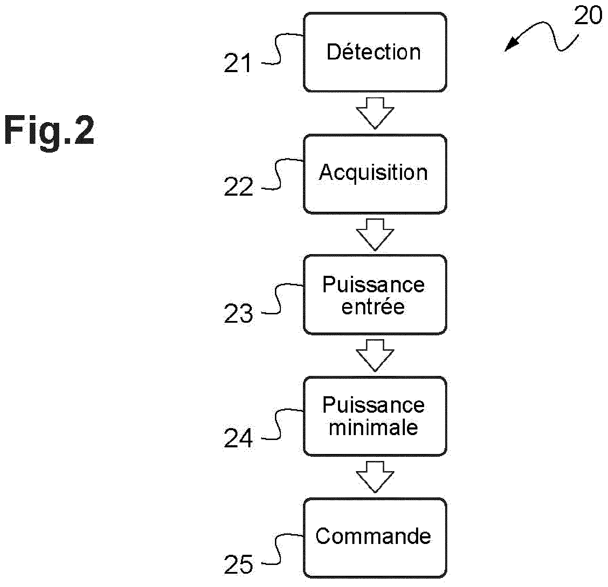

Les figures 1 et 2 se rapportant à un même mode de réalisation de l'invention, elles seront commentées simultanément.

Un véhicule automobile hybride comprend un moteur thermique, une machine électrique, un alterno-démarreur haute tension (abrégé HSG), un ensemble d'alimentation tel que décrit précédemment en référence à la figure 1, et des moyens de commande du convertisseur continu-continu 12, aussi appelé DCDC 12.

Les moyens de commande du convertisseur continu-continu 12 sont destinés à s'assurer qu'une puissance suffisante et un courant suffisant soient fournis depuis le HSG au DCDC 12, de sorte que le réseau basse-tension soit toujours correctement alimenté.

Le véhicule automobile hybride comprend aussi des moyens mettant en œuvre un procédé de contrôle optimisé du couple disponible sur un véhicule hybride pendant les passages de vitesses.

Les moyens de commande sont adaptés pour mettre en œuvre un procédé de commande 20.

Le procédé de commande comprend une première étape de détection 21 d'un changement de vitesse sur ledit boitier de vitesse ou d'un mode à relais batterie ouverts. Cette détection est par exemple réalisée par réception d'un signal numérique provenant du boitier de vitesse robotisé.

Lorsqu'un changement de vitesse ou un mode relais ouverts est détecté, le procédé met en œuvre une étape d'acquisition 22 des valeurs de tension et de courant aux bornes du convertisseur continu-continu 12.

Ces valeurs de tension et de courant, sont ici obtenus par les signaux d'informations émis par le DCDC 12 de manière régulière sur le réseau de communication CAN du véhicule automobile. Les signaux d'informations comprennent classiquement les valeurs de tension et de courant à ses bornes, ou toute autre information permettant de les déterminer.

Ensuite on met en œuvre une première étape de calcul 23 de la puissance d'entrée du convertisseur continu-continu DCDC 12 en fonction des valeurs de tensions et de courant acquises.

L'homme du métier est apte à calculer la puissance d'entrée, autrement dit la puissance consommée sur le réseau haute-tension 1, et sa puissance de sortie, autrement dit la puissance injectée sur le réseau basse tension 14. Il est connu que, au rendement près, ces deux puissances sont égales.

On met ensuite une deuxième étape de calcul 24 d'une valeur de puissance minimale en fonction de ladite puissance d'entrée et d'une valeur de correction.

En particulier la puissance minimale correspond à la puissance d'entrée au moment où le changement de vitesse ou le mode relais ouverts est détecté à laquelle on ajoute la valeur de correction.

Cette valeur de correction correspond à une puissance de marge pour assurer que la tension du réseau basse-tension 14 reste au-dessus de 13.5V. Cette puissance de marge est généralement comprise entre 1kW et 5kW, par exemple 2kW.

Ensuite on met en œuvre une étape de commande 25 du convertisseur continu-continu 12 de sorte à ce qu'il fournisse en sortie ladite puissance minimale calculée.

L'effet de cette augmentation de puissance est que la tension du réseau de bord 17 va augmenter, mais ceci n'est pas problématique car les contraintes du réseau de bord 17 sont moindres en ce qui concerne les augmentations de tension. Le réseau de bord 17 pouvant tolérer généralement jusqu'à une tension de 18V.

Ainsi on s'assure que le DC/DC alimente dès le début de la transition le réseau de bord avec suffisamment d'énergie pour alimenter les éventuels consommateurs qui pourraient être activé pendant cette transition.

Ainsi, sans appel de puissance sur le réseau de bord 17, la tension va rester stable aux alentours de 15.5V en raison du surplus de puissance injectée avec la marge de 2kW. Si un appel de courant a lieu, par exemple suite à l'activation de la direction assistée par exemple qui consomme sensiblement 1.2kW, alors la puissance prélevée au réseau haute tension 1 par le DCDC 12 ne variera pas mais la tension du réseau de bord va chuter à 14.3V. La tension est toujours maintenue au-dessus des 13.5V assurant la robustesse de tous les consommateurs du réseau de bord 17.

## Revendications

1. Procédé de commande d'un ensemble électrique pour un véhicule automobile hybride comprenant un boitier de vitesse à transmission hybride, un réseau électrique haute tension (1) comprenant une batterie d'accumulateurs électriques (13), un alterno-démarreur haute tension associé à un onduleur (11), une machine électrique associée à un autre onduleur (10), le véhicule automobile hybride comprenant en outre un réseau électrique basse tension (14, 17), et un convertisseur continu-continu (12) apte à alimenter, depuis le réseau haute tension (1), le réseau électrique basse tension (14) ;
le procédé comprenant :
- Une étape de détection (21) d'un changement de mode ou de vitesse sur ledit boitier de vitesse, nécessitant l'ouverture des relais batterie, **caractérisé en ce que**, lorsqu'un tel changement de mode ou de vitesse est détecté,
- Une étape d'acquisition (22) des valeurs de tension et de courant aux bornes du convertisseur continu-continu (12),
- Une première étape de calcul (23) de la puissance d'entrée du convertisseur continu-continu (12) en fonction des valeurs de tensions et de courant acquises ;
- Une deuxième étape de calcul (24) d'une valeur de puissance minimale en fonction de ladite puissance d'entrée et d'une valeur de correction, et
- Une étape de commande (25) du convertisseur continu-continu (12) de sorte à fournir en sortie ladite puissance minimale calculée.

2. Procédé selon la revendication 1 **caractérisé en ce que** la deuxième étape de calcul (24) comprend l'addition de la puissance d'entrée avec ladite valeur de correction.

3. Procédé selon la revendication 1 ou 2, **caractérisé en ce que** ladite valeur de correction est comprise entre 1kW et 5kW, par exemple sensiblement égale à 2kW.

4. Dispositif de commande d'un ensemble électrique pour un véhicule automobile, ledit dispositif comprenant un boitier de vitesse à transmission hybride, un réseau électrique haute tension (1) comprenant une batterie d'accumulateurs électriques (13), un alterno-démarreur haute tension associé à un onduleur (11), une machine électrique associée à un autre onduleur (10), le véhicule automobile hybride comprenant en outre un réseau électrique basse tension (14, 17), et un convertisseur continu-continu (12) apte à alimenter, depuis le réseau haute tension (1), le réseau électrique basse tension (14) ;
le dispositif comprenant :
- Des moyens de détection d'un changement de mode ou de vitesse sur ledit boitier de vitesse, nécessitant l'ouverture des relais batterie,
- Des moyens d'acquisition des valeurs de tension et de courant aux bornes du convertisseur continu-continu (12),
- Des moyens de calcul de la puissance d'entrée du convertisseur continu-continu en fonction des valeurs de tensions et de courant acquises ;
- Des moyens de calcul d'une valeur de puissance minimale en fonction de ladite puissance d'entrée et d'une valeur de correction ;
- Des moyens de commande du convertisseur continu-continu (12) de sorte à fournir en sortie ladite puissance minimale calculée,
**caractérisé en ce que** ledit dispositif est configuré pour exécuter le procédé selon l'une des revendications 1 à 3.

5. Véhicule automobile hybride comprenant un boitier de vitesse à transmission hybride, un réseau électrique haute tension (1) comprenant une batterie d'accumulateurs électriques (13), un alterno-démarreur haute tension associé à un onduleur (11), une machine électrique associée à un autre onduleur (10), le véhicule automobile hybride comprenant en outre un réseau électrique basse tension (14, 17), un convertisseur continu-continu (12) apte à alimenter, depuis le réseau haute tension (1), le réseau électrique basse tension (14) et un dispositif de commande selon la revendication 4.

## Patentansprüche

1. Verfahren zum Steuern einer elektrischen Baugruppe für ein Hybridkraftfahrzeug, umfassend ein Hybridantriebsgetriebe, ein Hochspannungselektrizitätsversorgungsnetz (1), umfassend eine Batterie (13) aus elektrischen Akkumulatoren, einen Hochspannungsstartergenerator, der mit einem Wechselrichter (11) verbunden ist, eine elektrische Maschine, die mit einem weiteren Wechselrichter (10) verbunden ist, das Hybridkraftfahrzeug umfassend ferner ein Niederspannungselektrizitätsversorgungsnetz (14, 17) und einen Gleichstrom-Gleichstrom-Wandler (12), der geeignet ist, um das Niederspannungselektrizitätsversorgungsnetz (14) aus dem Hochspannungsnetz (1) zu speisen;
das Verfahren umfassend:
- einen Schritt (21) zum Erkennen einer Änderung eines Modus oder einer Geschwindigkeit an dem Getriebe, die das Öffnen der Batterierelais erfordert, **dadurch gekennzeichnet, dass,** wenn eine solche Änderung des Modus oder der Geschwindigkeit erkannt wird,
- ein Schritt (22) zum Erfassen der Spannungs- und Stromwerte an den Anschlüssen des Gleichstrom-Gleichstrom-Wandlers (12),
- ein erster Schritt (23) zum Berechnen der Eingangsleistung des Gleichstrom-Gleichstrom-Wandlers (12) in Abhängigkeit von den erfassten Spannungs- und Stromwerten;
- ein zweiter Schritt (24) zum Berechnen eines Mindestleistungswertes in Abhängigkeit von der Eingangsleistung und einem Korrekturwert, und
- ein Schritt (25) zum Steuern des Gleichstrom-Gleichstrom-Wandlers (12), um die berechnete Mindestleistung als Ausgabe bereitzustellen.

2. Verfahren nach Anspruch 1, **dadurch gekennzeichnet, dass** der zweite Berechnungsschritt (24) das Addieren der Eingangsleistung mit dem Korrekturwert umfasst.

3. Verfahren nach Anspruch 1 oder 2, **dadurch gekennzeichnet, dass** der Korrekturwert zwischen 1 kW und 5 kW liegt und beispielsweise im Wesentlichen gleich 2 kW ist.

4. Vorrichtung zum Steuern einer elektrischen Baugruppe für ein Kraftfahrzeug, die Vorrichtung umfassend ein Hybridantriebsgetriebe, ein Hochspannungselektrizitätsversorgungsnetz (1), umfassend eine Batterie (13) aus elektrischen Akkumulatoren, einen Hochspannungsstartergenerator, der mit einem Wechselrichter (11) verbunden ist, eine elektrische Maschine, die mit einem weiteren Wechselrichter (10) verbunden ist, das Hybridkraftfahrzeug umfassend ferner ein Niederspannungselektrizitätsversorgungsnetz (14, 17) und einen Gleichstrom-Gleichstrom-Wandler (12), der geeignet ist, um das Niederspannungselektrizitätsversorgungsnetz (14) aus dem Hochspannungsnetz (1) zu speisen;
die Vorrichtung umfassend:
- Mittel zum Erkennen einer Änderung des Modus oder der Geschwindigkeit an dem Getriebe, die das Öffnen der Batterierelais erfordert,
- Mittel zum Erfassen der Spannungs- und Stromwerte an den Anschlüssen des Gleichstrom-Gleichstrom-Wandlers (12),
- Mittel zum Berechnen der Eingangsleistung des Gleichstrom-Gleichstrom-Wandlers in Abhängigkeit von den erfassten Spannungs- und Stromwerten;
- Mittel zum Berechnen eines Mindestleistungswertes in Abhängigkeit von der Eingangsleistung und einem Korrekturwert;
- Mittel zum Steuern des Gleichstrom-Gleichstrom-Wandlers (12), um die berechnete Mindestleistung als Ausgabe bereitzustellen,
**dadurch gekennzeichnet, dass** die Vorrichtung zum Ausführen des Verfahrens nach einem der Ansprüche 1 bis 3 konfiguriert ist.

5. Hybridkraftfahrzeug, umfassend ein Hybridantriebsgetriebe, ein Hochspannungselektrizitätsversorgungsnetz (1), umfassend eine Batterie (13) aus elektrischen Akkumulatoren, einen Hochspannungsstartergenerator, der mit einem Wechselrichter (11) verbunden ist, eine elektrische Maschine, die mit einem weiteren Wechselrichter (10) verbunden ist, das Hybridkraftfahrzeug umfassend ferner ein Niederspannungselektrizitätsversorgungsnetz (14, 17), einen Gleichstrom-Gleichstrom-Wandler (12), der geeignet ist, um das Niederspannungselektrizitätsversorgungsnetz (14) aus dem Hochspannungsnetz (1) zu speisen, und eine Steuervorrichtung nach Anspruch 4.

## Claims

1. Method of controlling an electrical assembly for a hybrid motor vehicle comprising a hybrid transmission gearbox, a high-voltage electrical network (1) comprising an electrical storage battery (13), a high-voltage starter-alternator associated with an inverter (11), an electrical machine associated with another inverter (10), the hybrid motor vehicle further comprising a low-voltage electrical network (14, 17), and a DC-DC converter (12) able to supply the low-voltage electrical network (14) from the high-voltage network (1);
the method comprising:
- a step (21) of detecting a mode or speed change on said gearbox, requiring the battery relays to be open, **characterized in that,** when such a mode or speed change is detected,
- a step (22) of acquiring voltage and current values at the terminals of the DC-DC converter (12),
- a first step (23) of calculating the input power of the DC-DC converter (12) as a function of the acquired voltage and current values;
- a second step (24) of calculating a minimum power value as a function of said input power and a correction value, and
- a step (25) of controlling the DC-DC converter (12) so as to output said calculated minimum power.

2. Method according to claim 1, **characterized in that** the second calculation step (24) comprises adding the input power to said correction value.

3. Method according to claim 1 or 2, **characterized in that** said correction value is between 1 kW and 5 kW, for example substantially equal to 2 kW.

4. Device for controlling an electrical assembly for a motor vehicle, said device comprising a hybrid transmission gearbox, a high-voltage electrical network (1) comprising an electrical storage battery (13), a high-voltage starter-alternator associated with an inverter (11), an electrical machine associated with another inverter (10), the hybrid motor vehicle further comprising a low-voltage electrical network (14, 17), and a DC-DC converter (12) able to supply the low-voltage electrical network (14) from the high-voltage network (1);
the device comprising:
- means for detecting a mode or speed change on said gearbox, requiring the battery relays to be open,
- means for acquiring voltage and current values at the terminals of the DC-DC converter (12),
- means for calculating the input power of the DC-DC converter as a function of the acquired voltage and current values;
- means for calculating a minimum power value as a function of said input power and a correction value;
- means for controlling the DC-DC converter (12) so as to output said calculated minimum power, **characterized in that** said device is configured to perform the method according to one of claims 1 to 3.

5. Hybrid motor vehicle comprising a hybrid transmission gearbox, a high-voltage electrical network (1) comprising an electrical storage battery (13), a high-voltage starter-alternator associated with an inverter (11), an electrical machine associated with another inverter (10), the hybrid motor vehicle further comprising a low-voltage electrical network (14, 17), a DC-DC converter (12) capable of supplying the low-voltage electrical network (14) from the high-voltage network (1), and a control device according to claim 4.
